# EUROPEAN PATENT SPECIFICATION

(11) **EP 1 407 367 B1**
(45) Date of publication and mention of the grant of the patent: **30.08.2006**
(21) Application number: 02747928.6
(22) Date of filing: 20.06.2002
(51) Int. Cl.: G06F 13/00, H04L 29/06

(54) **Intelligent caching and network management based on location and resource anticipation**
Intelligente Cache-Speicherung und Netwerkverwaltung auf der Basis der Positions- und Ressourcenantizopierung
Antememorisation intellitgente et gestion du réseau fondées sur l'anticipation de la position et des ressources

(30) Priority: 21.06.2001 US 886306
(43) Date of publication of application: 14.04.2004
(73) Proprietor: International Business Machines Corporation, Armonk, NY 10504 (US)
(72) Inventor: GOPALAKRISHNAN, Ponani, Yorktown Heights, NY 10598 (US); MAES, Stephane, H., Danbury, CT 06811 (US); RAMASWAMY, Ganesh, N., Ossining, NY 10562 (US)
(74) Representative: Moss, Robert Douglas
(86) International application number: PCT/US2002/019658
(87) International publication number: WO 2003/001327

(56) References cited:
- EP-A- 1 039 721
- US-A- 5 881 231
- US-A- 5 893 920
- US-A- 6 032 227
- US-A- 6 119 006
- US-B1- 6 202 023
- US-B1- 6 243 755
- HADJIEFTHYMIADES S ET AL: "A resource management scheme for efficient WWW computing in wireless communications" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 3, 19 September 1999 (1999-09-19), pages 1755-1759, XP010353269 ISBN: 0-7803-5435-4

## Description

### BACKGROUND OF THE INVENTION

### 1. Field of the Invention

The present invention relates to information transfer and network management, and more particularly to a system and method which transfers resources to locations based on predictions of application needs of a user.

### 2. Description of the Related Art

With the emergence of different types of technologies related to mobile computing, location-dependent applications and services, and E-Utilities computing models (e.g. MICROSOFT.NET or ORACLEMOBILE), users have to access information from a plurality of mobile locations, often using wireless Internet access. This is emphasized by models where the "computer is the network" as exemplified by e-Utilities (Pervasive) and network computing where most or all the applications are provided by network services instead of locally on the device.

Another alternative, motivated especially by the need to be able to keep running when in disconnected mode, includes a replication model. For example, application beans (or other object frameworks) can be replicated on the device, and, upon connection, these beans are updated.

As a result, traffic on the network increases significantly, and quite frequently users face the need to rapidly access huge amounts of information.

Document US 6,243,755 B1 discloses a method for intelligent caching in which the user's schedule is used to predict the location of the user, so that it is possible to transmit the necessary information to the user by the time it is actually needed and to the right location.

### SUMMARY OF THE INVENTION

The present invention provides a system as claimed in claim 1, a method as claimed in claim 6 and a program storage device as claimed in claim 13 .

### BRIEF DESCRIPTION OF DRAWINGS

The invention will be described in detail in the following description of preferred embodiments with reference to the following figures wherein:
FIG. 1 is a block/flow diagram showing illustrative network connections in accordance with the present invention;
FIG. 2 is a block/flow diagram showing a system/method for intelligent caching and network management in accordance with the present invention; and
FIG. 3 depicts an illustrative scenario for employing the intelligent caching and network management in accordance with the present invention.

### DETAILED DESCRIPTION OF PREFERRED EMBODIMENTS

The present invention provides a system and method able to predict future locations and application needs of a user, so that the information needed can be cached intelligently in the user's device or downloaded in advance (or scheduled to be downloaded later) to a local or remote device. This may be through a local device or a remote device at a particular destination. Advantageously, the information/application is available when needed, while peak network demands are reduced since information transfer can occur at off-peak times or be distributed over a longer period of time during peak times.

Such a capability will not only be useful when the user is travelling to different locations, but also for a specific location when future application needs can be predicted. In one particular example, the user interface may include speech recognition or other multi-modal capabilities. The need to perform intelligent caching becomes more important, since data files (such as user's personal language models, acoustic models (speaker dependent or location dependent (optimized for a particular microphone/audio sub-system, acoustic environment (car, street noise etc.), vocabulary files, parser files, grammar files, etc.) should not be delayed in reaching the user's current device.

Applications such as a user's calendar and travel itineraries are capable of providing an anticipated location of the user in the future. As a result, the information provided by these applications may be used to determine which information may become necessary for the user, and based on this prediction, the appropriate information (e.g., data files and pointers or reservations of information sources, including networked sources may be cached on a mobile or remote device).

For example, if a user is expected to make a presentation at a remote location on a pre-specified topic (as indicated in the user's calendar), then the appropriate file(s) may be cached (i.e. copied) to either the user's mobile device (personal digital assistant (PDA), notebook computer, printer, FAX machine, etc.) or a server at the target location. Similarly, if a user is expected to travel to a remote location (as indicated in the user's itinerary), information such as driving directions, weather and traffic information, may be cached to a device accessible by the user at the time of need or a request for the future delivery of such information to the target device may be made.

In an illustrative example of the present invention, electronic schedules and itineraries for a user or plurality of users are employed, along with the current time and location of each user to predict what kind of information and resources will be needed by each user at each of a plurality of locations. Locations will be used through out this disclosure to mean both stationary and mobile locations which include a device capable of receiving (or sending) information. On that basis, the system can prepare and ensure that the information and the resources needed are available at each expected location. This reduces delay for access to information as well as peak traffic on a given network as may happen if the information must be immediately accessed.

This invention assumes that the decision on where (multi-modal/conversational) processing occurs is based on: processor capabilities versus application requirements, engine capabilities, processor load, memory load, network traffic, application requirements/prescription, user/device/service provider preferences and location/accessability of the data files. The decision of where to store and execute some functions is not only decided on the basis of location prediction, but also based on the availability and capability of the different available machines. This is also part of the caching and management of the present invention.

In the current application, information is cached based on the user's anticipated location as described in a location prediction enabled application such as a user's calendar or travel itinerary and the actual location of the user. When sufficient amount of user-specific information is not available, data files associated with relevant applications to be used and network management/engine selection will be based on the (current or anticipated) general user population of the system.

Based on current and future location information and based on the user's preference, current time and location, the system determines the nature of the application that will be run and the nature of the data files that are needed for the application. This information can be cached en route or at the final expected location. This may be performed automatically (through learning the past habits of the user and type of applications and used by the user for a given type of event at a given location) or manually (by having the user proving location and requirements manually through a "reservation interface").

It should be understood that the elements shown in the FIGS. may be implemented in various forms of hardware, software or combinations thereof. Preferably, these elements are implemented in software with hardware interfaces on one or more appropriately programmed general purpose digital devices having a processor and memory and input/output interfaces.

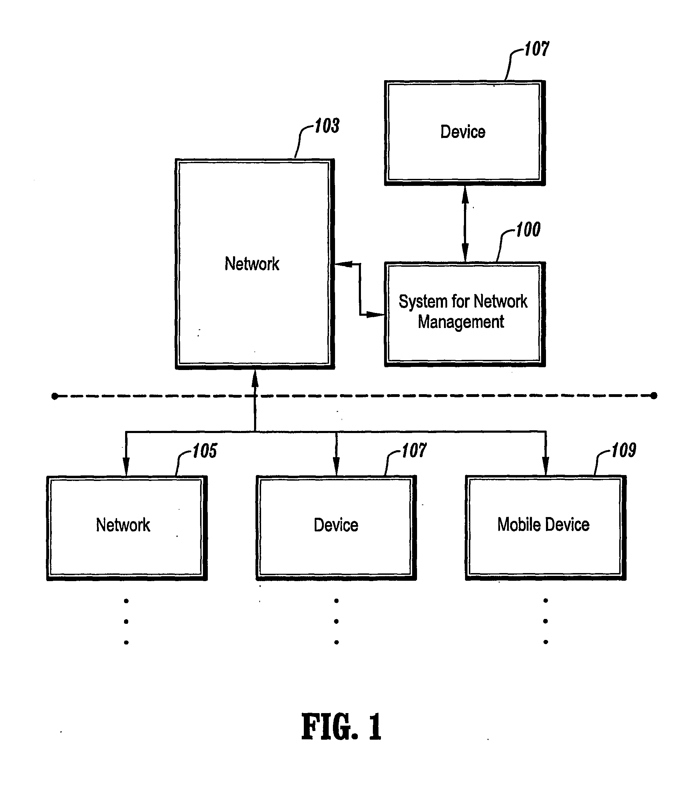

Referring now to the drawings in which like numerals represent the same or similar elements and initially to FIG. 1, system 100 may include any hardware system capable of memory storage and processing functions. In a preferred embodiment, system 100 may include a computer, such as a personal computer or a mainframe system. The computer may be part of a local network 103 with access to external networks 105 (such as the Internet). System 100 may also be implemented within a single network.

System 100 includes the capability of communicating with devices 107 within network 103 and devices 109 outside of network 103. Devices 107 and 109 may include computers, telephones, personal digital assistants, FAX machines, other mobile communication devices or any other device capable of communication with system 100.

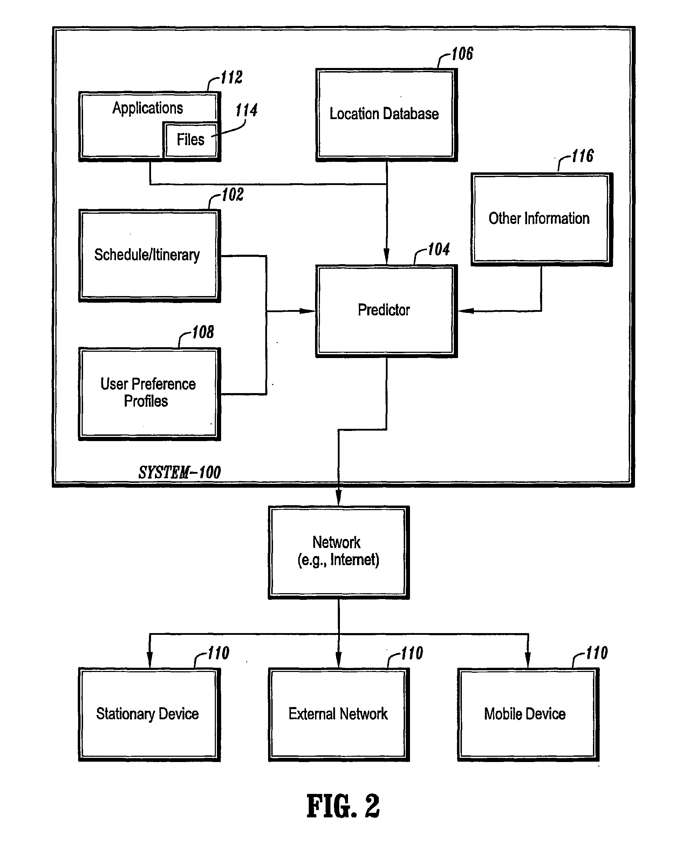

Referring to FIG. 2, a block/flow diagram showing an illustrative system/method in accordance with the present invention will now be described.

In block 102, a scheduling or itinerary application is included for one or more users. Scheduling software may include conventional software applications, such as those employed for schedule planning for individuals or for project management. Itinerary software may include conventional reservation programs such as those employed by travel agents, etc. to define locations and times where an individual is expected. Other scheduling or itinerary programs, such as, customized programs may also be employed. Applications in block 102 provide a location versus time matrix which can identify where a user is and when the user is likely to be there.

In block 104, an application or applications for location/resource predication are provided. The application in block 104 employs prediction methods, such as, rule-based prediction or prediction using statistical modelling, which employ information (schedule, itinerary, etc.) from block 102. Rule-based prediction may use rules derived from user specified preferences from block 108 (e.g. "always download presentation slides to remote computer at destination two hours before scheduled start time of presentation"), or default user-independent preferences specified by application developers (e.g. "most users would like airport gate information downloaded to their wireless device one hour before flight departure time"). Prediction based on statistical modelling will use past history and frequency of event pairs for prediction (e.g. "user has asked for document X during 90% of the visits to location Y, so automatically download document X prior to visits to location Y, with optional prompting to confirm with the user".).

Based on the information from block 102, a prediction may be made as to the location of the user at a give time, a most likely or nearest communication device 106 and applications or information needed in accordance with factual circumstances related to the location, time, and activity.

For example, if a first user needs presentation slides at a first location in two days, scheduling software application 102 may include an entry of "Slide show of file: XYZ on January 20 at the first location". System 100 may on its own initiative predict network usage for the next two days based on normal computational usage and optimize transmission of the file XYZ to the first location during off-peak network usage time or over a longer duration during peak times. In any event file XYZ will be waiting on a designated communication device (e.g., a computer) at the first location in two days.

Inputs to prediction module 104 may include user schedules, user locations, devices available for caching, security information for gaining access to these devices, user information, such as travel habits and preferences, and any other information pertinent to information/application transfer.

Intelligent applications that can predict user locations, any include, for example, intelligent agents or devices that keep track of when the user enters and exits a particular location (such as the cafeteria or the library within a building), and constructs models from the data. Such a system, when available, can also be used to predict the user's future locations. These applications, while being capable of predicting locations, can also provide other information related to what resources the user may need at the predicted location. For example, a calendar entry may include a link to a presentation file, or the entry may be able to predict which presentation the user may need based on a subject line in the entry, or other processing of the entry of other fields available.

In block 106, a database of locations is maintained. System 100 maintains a database of previously visited locations or otherwise known locations, with information about the locations, including the resources available. Resources available may include software programs, hardware capabilities (e.g., types of computer systems available, FAX machines, telephones, personal digital assistants, printers available at each location). This also may include considerations in terms of CPU, memory available, bandwidth etc. Information, such as, facilities and networking resources available at a conference room or an office building, preferred driving directions to the location, etc., may also be stored. Whenever a user travels to a new location, the database may be updated by the user or by a system administrator, etc.

In block 108, user preference management is provided. Every user will have a profile indicating personal preferences. For example, the user may choose to have driving directions automatically downloaded to a devices 110, such as a hand held device (PDA, cellular telephone, etc.), a computer, a network or any other suitable device. Documents and data files may be cached on a mobile device or a server or printer at a target location. Such preferences may be dependent on the specific location to be visited. The personal profile may be created explicitly from user input, or automatically by keeping track of past preferences or actual events.

This present invention can also be exploited even in the absence of "location". For example, in a network computing/e-utilities model, prediction of the applications to be used enables preparation of the files. For example, these files may include data files needed to support speech, multi-modal or conversational applications that the user will need at the location or on their device(s). This may also include conversion of files from one format to another to support applications available on location (e.g., .PPT to .PRZ or HTML etc.).

Communication devices 110 may include any type of device capable of downloading/uploading information or applications from/to system 100. Devices 110 may be multi- modal devices, e.g., capable of audio input/output (I/O), visual I/O, text I/O or combinations thereof. Applications 112 may include speech recognition and translation services, spreadsheets, presentation software or any other software program or suite of programs.

It is to be understood that applications 112 may also include files 114 or data 116 which can be transmitted to the user's location. Files 114 may include designations in a title of the file, file extensions or routing information which is understood to system 100. System 100 may, on its own initiative or upon prompting by schedule 102 (upon completion of an event or passing of a particular time), search files to determine where and when files are to be distributed. Upon determining the size of files, network traffic conditions and target destinations, predictor 104 optimizes available bandwidth usage to send applications/data when appropriate, but within the conditions set by schedule 102, user profile 108 and the location of the user.

Optimization of bandwidth usage by predictor 104 may include using previous bandwidth usage history for predicting the best times or time intervals for transfer files, data or applications. The usage history may include information about the local network of system 100 or line usage of, say, of cellular or telephone networks which may be connected to system 100.

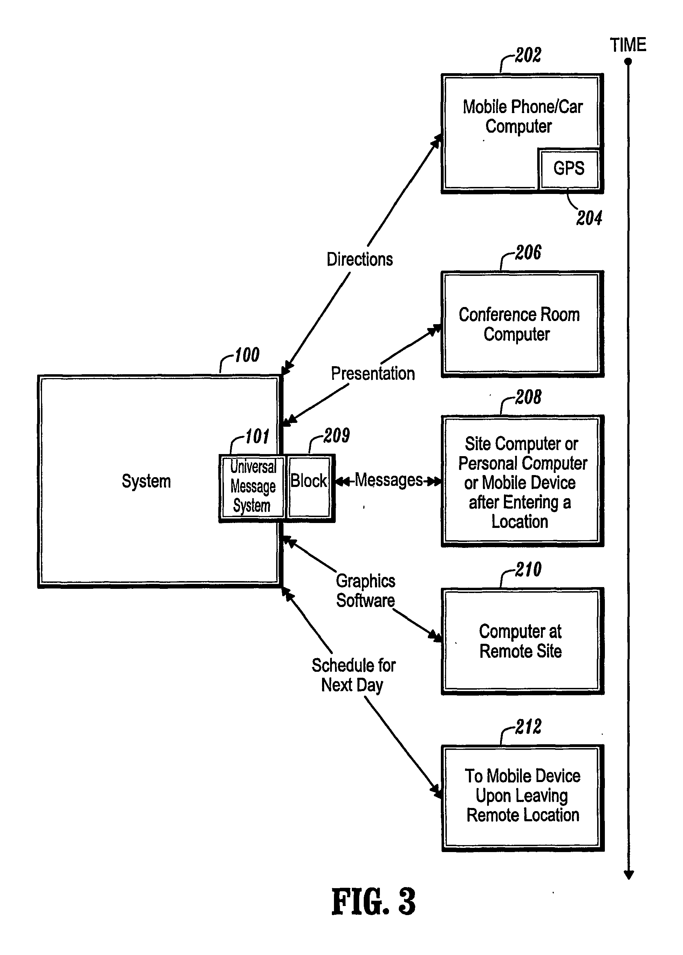

Referring to FIG. 3, an illustrative scenario of the present invention is described to demonstrate usage of one aspect of the present invention. System 100 is provided with a user's itinerary for a business trip. In block 202, user's car is equipped with a computer system or a mobile communication device (e.g., a mobile phone with a display). System 100 delivers directions to the user as the user is driving, or the directions have been previously downloaded to the car computer or the mobile device so that the user has access to the directions. The download may have been performed for example, the night before departure knowing the approximate departure time of the user based on manual entry or based on the user's profile 108 and predictions by predictor 104 (FIG. 2). In addition, it is possible to preset or reserve the network configuration and bandwidth required for the applications. This may include reserving a particular quality of service, level of connectivity, bandwidth, call-in number, etc .

In one embodiment, the car driven by user may have a global positioning system (GPS) 204 which updates system 100 with position information. Different components, applications, information, etc. may be provided to user with respect to the user's position. For example, travelling through different regions, different grammars for areas in that region may be downloaded or information about that area may be downloaded.

In block 206, the user is scheduled to provide a presentation at a remote location. Before the time of the presentation, a presentation file is downloaded to a designated computer (or printer) in the conference room at the remote site during a preferred time. The presentation file is opened and employed to provide the presentation.

In block 208, after the presentation, the user enters an office at the remote site, which may require a swipe card, a keypad code entry or other locating device to enter. This event may trigger system 100 to send, for example, messages to a site computer, personal computer (e.g., a laptop) or a mobile device. Messages may include, for example, emails, telephone messages or FAXes. These messages may also be based on the user's itinerary, as described above. This also may include blocking calls in block 209.

In block 209, if calls or emails are made by specific people, the messages may be permitted, and/or people not on a pre-approved list of names or calling numbers, may be blocked, etc. A universal messaging system 101 may be configured for the user based on the prediction of his activity (current and future), for example, hold the calls for now, forward the calls to the cell phone mail box for the user to listen to while travelling, redirect faxes to a particular number or to an e-mail address, etc. The capability of automatically configuring the universal messaging service may be based on current and/or future location and activities. Universal messaging system 101 may employ any conventional universal messaging system. Universal messaging system 101 may also be manually configured by the user.

In block 210, based on user preferences stored in system 100, user prefers to work with a graphics software package. An authorized computer at the remote site is checked to determine if the preferred application is resident on the authorized computer. Since the authorized computer does not include the graphics software, the software is downloaded from system 100 in advance of user's scheduled time. Also, particular files, e.g., predicted files, such as the last file worked on, may be sent as well.

This may be employed in conjunction with software on demand/subscription/e-utilities. Not only can you subscribe to the service, but also you can access it from numerous locations and access channel. In addition, the download and registration/login may be automated for the user to find it ready to use when the user reaches the new location/device.

In block 212, upon leaving the remote site, a schedule for the next day's event may be downloaded from system 100. Although the present invention has been described in terms of various scenarios, the present invention should not be construed as limited by these scenarios.

Other example uses of the present invention may include the following. Weather forecasts may be employed to create schedule change and resource re-arrangement. For example, if rain is predicted, a golf outing may be cancelled and resources may be needed in advance of previously scheduled times. If the system predicts visitors, (at a different location), it can prepare some specific resources based on the predicted visitors, and their preferences, etc. Also other short-term events may result in dynamic re- configurations: a cancelled appointment, an emergency message, a financial event, etc.

In another example, consider a car navigation system. On the basis of your location and destination (i.e. in the calendar) you can reload grammars and vocabulary for the street address in those two regions. For example, if an individual is touring Europe, while on the road, you can reload the grammars (e.g., for speech recognition, local vocabularies etc.) of the next immediate region where you will be while having the grammar for the current region active. This is an efficient way to enable a navigation system by downloading the navigation data files and speech data files (grammars of all the street addresses), based on where the user is and will go.

## Claims

1. A system (100) for intelligent caching and network management, comprising:
contextual information representing needs of a user;
a contextual system, which determines settings based on the contextual information and determines services and devices available for the user, in accordance with the contextual information;
a predictor (104) which receives the contextual information, the settings, the services available and the devices available and predicts the needs of the user to make resources available to the user in accordance with predictions;
event and time information representing a user's schedule; and
a location database (106) including information about destination devices and capabilities of the destination devices; wherein
the predictor receives the event and time information and the information and capabilities of the destination devices to predict the location of the user and resources needed at the location such that the resources are transferred to the user at a location when and where the resources are needed.

2. The system as recited in claim 1, wherein the contextual information includes a user itinerary.

3. The system as recited in claim 1, wherein the devices available include one of a mobile communication device, a stationary communication device and a computer.

4. The system as recited in claim 1, wherein the resources include at least one of a file, an application and data.

5. The system as recited in claim 1, further comprising a universal messaging system coupled to the predictor, the universal messaging system being configured to provide message services in accordance with the needs of the user predicted by the predictor.

6. A method for intelligent caching and network management, comprising:
representing a user's schedule with event and time information;
identifying destination devices and capabilities of the destination devices from a location database which are available for transferring information to a user in accordance with the user's schedule; and
predicting the location of the user and resources needed at the location based on the event and time information and the information and capabilities of the destination devices.

7. The method as recited in claim 6, further comprising the step of providing a user preference profile which includes user preferences employed by the predictor.

8. The method as recited in claim 6, wherein the event and time information includes a user itinerary.

9. The method as recited in claim 6, wherein the destination devices include one of a mobile communication device, a stationary communication device and a computer.

10. The method as recited in claim 6, wherein the resources include at least on of a file, an application and data.

11. The method as recited in claim 6, further comprising the step of transferring the resources to the user at a location when and where the resources are needed.

12. The method as recited in claim 11, wherein the step of transferring the resources to the user includes blocking unwanted messages to the user.

13. A program storage device readable by machine, tangibly embodying a program of instructions executable by the machine to perform a method according to any one of claims 6 to 12 for intelligent caching and network management.

## Patentansprüche

1. System (100) für die intelligente Zwischenspeicherung und Netzwerkverwaltung, das Folgendes umfasst:
Kontextdaten, die für die Erfordernisse eines Benutzers stehen;
ein Kontextsystem, das ausgehend von den Kontextdaten Einstellungen ermittelt und das gemäß den Kontextdaten Dienste und Einheiten ermittelt, die dem Benutzer zur Verfügung stehen;
eine Vorhersageeinheit (104), welche die Kontextdaten, die Einstellungen, die verfügbaren Dienste sowie die verfügbaren Einheiten empfängt und die Erfordernisse des Benutzers vorhersagt, um gemäß den Vorhersagen dem Benutzer Ressourcen zur Verfügung zu stellen;
Ereignis- und Zeitdaten, die für einen Benutzerzeitplan stehen; und
eine Standortdatenbank (106) mit Daten zu Zieleinheiten und Funktionen der Zieleinheiten; wobei
die Vorhersageeinheit die Ereignis- und Zeitdaten sowie die Daten und Funktionen der Zieleinheiten empfängt, um den Standort des Benutzers und die an dem Standort benötigten Ressourcen vorherzusagen, so dass die Ressourcen - wenn und wo sie benötigt werden - an einem Standort an den Benutzer übertragen werden.

2. System nach Anspruch 1, wobei die Kontextdaten einen Benutzerwegplan beinhalten.

3. System nach Anspruch 1, wobei die verfügbaren Einheiten eine nichtortsfeste Datenübertragungseinheit, eine ortsfeste Datenübertragungseinheit oder einen Computer beinhalten.

4. System nach Anspruch 1, wobei die Ressourcen mindestens eine Datei, eine Anwendung oder Daten beinhalten.

5. System nach Anspruch 1, das weiter ein Mehrzweck-Nachrichtensystem umfasst, das mit der Vorhersageeinheit verbunden ist, wobei das Mehrzweck-Nachrichtensystem so konfiguriert ist, dass es Nachrichtendienste gemäß den von der Vorhersageeinheit vorhergesagten Erfordernissen des Benutzers bereitstellt.

6. Verfahren für die intelligente Zwischenspeicherung und Netzwerkverwaltung, das Folgendes umfasst:
Darstellen eines Benutzerzeitplans mit Ereignis- und Zeitdaten;
Erkennen von Zieleinheiten und von Funktionen der Zieleinheiten von einer Standortdatenbank, die zur Verfügung stehen, um die Daten gemäß dem Benutzerzeitplan an einen Benutzer zu übertragen.
Vorhersagen des Benutzerstandorts und der an dem Standort benötigten Ressourcen auf Grundlage der Ereignis- und Zeitdaten und der Daten und Funktionen der Zieleinheiten.

7. Verfahren nach Anspruch 6, das weiter den Schritt des Bereitstellens eines Benutzerpräferenzprofils umfasst, das Benutzerpräferenzen beinhaltet, die von der Vorhersageeinheit verwendet werden.

8. Verfahren nach Anspruch 6, wobei die Ereignis- und Zeitdaten einen Benutzerwegplan beinhalten.

9. Verfahren nach Anspruch 6, wobei die Zieleinheiten eine nichtortsfeste Datenübertragungseinheit, eine ortsfeste Datenübertragungseinheit oder einen Computer beinhalten.

10. Verfahren nach Anspruch 6, wobei die Ressourcen mindestens eine Datei, eine Anwendung oder Daten beinhalten.

11. Verfahren nach Anspruch 6, das weiter den Schritt des Übertragens der Ressourcen - wenn und wo sie benötigt werden - an den Benutzer an einen Standort umfasst.

12. Verfahren nach Anspruch 11, wobei der Schritt des Übertragens der Ressourcen an den Benutzer das Sperren unerwünschter, an den Benutzer gerichteter Nachrichten beinhaltet.

13. Maschinenlesbare Programmspeichereinheit, die mit einem in greifbarer Form vorliegenden Programm mit Befehlen ausgeführt ist, welche von der Maschine ausgeführt werden können, um ein Verfahren für die intelligente Zwischenspeicherung und Netzwerkverwaltung gemäß einem beliebigen der Ansprüche 6 bis 12 durchzuführen.

## Revendications

1. Système (100) destiné à une mise en antémémoire intelligente et à la gestion d'un réseau, comprenant :
des informations de contexte représentant les besoins d'un utilisateur,
un système de contexte, qui détermine les paramétrages sur la base des informations de contexte et détermine les services et les dispositifs disponibles pour l'utilisateur conformément aux informations de contexte,
un module de prédiction (104) qui reçoit les informations de contexte, les paramétrages, les services disponibles et les dispositifs disponibles et prédit les besoins de l'utilisateur pour rendre les ressources disponibles pour l'utilisateur conformément aux prédictions,
des informations d'événements et de temps représentant un planning d'utilisateur, et
une base de données de localisation (106) comprenant des informations relatives à des dispositifs de destination et aux capacités des dispositifs de destination, où
le module de prédiction reçoit les informations d'événements et de temps et les informations et les capacités des dispositifs de destination pour prédire l'emplacement de l'utilisateur et les ressources nécessaires à l'emplacement pour que les ressources soient transférées à l'utilisateur à un emplacement au moment où et à l'emplacement où les ressources sont nécessaires.

2. Système selon la revendication 1, dans lequel les informations de contexte comprennent un itinéraire d'utilisateur.

3. Système selon la revendication 1, dans lequel les dispositifs disponibles comprennent l'un d'un dispositif de communication mobile, d'un dispositif de communication fixe et d'un ordinateur.

4. Système selon la revendication 1, dans lequel les ressources comprennent au moins l'un d'un fichier, d'une application et de données.

5. Système selon la revendication 1, comprenant en outre un système de messagerie universel couplé au module de prédiction, le système de messagerie universel étant configuré pour procurer des services de messages selon les besoins de l'utilisateur prédits par le module de prédiction.

6. Procédé de mise en antémémoire intelligente et de gestion de réseau, comprenant :
la représentation d'un planning d'utilisateur avec des informations d'événements et de temps,
l'identification de dispositifs de destination et de capacité des dispositifs de destination à partir d'une base de données d'emplacement qui sont disponibles pour transférer des informations à un utilisateur conformément au planning de l'utilisateur, et
la prédiction de l'emplacement de l'utilisateur et des ressources nécessaires à l'emplacement sur la base des informations d'événements et de temps et des informations et des capacités des dispositifs de destination.

7. Procédé selon la revendication 6, comprenant en outre l'étape consistant à procurer un profil de préférence d'utilisateur qui comprend des préférences d'utilisateur employées par le module de prédiction.

8. Procédé selon la revendication 6, dans lequel les informations d'événements et de temps comprennent un itinéraire d'utilisateur.

9. Procédé selon la revendication 6, dans lequel les dispositifs de destination comprennent l'un d'un dispositif de communication mobile, d'un dispositif de communication fixe et d'un ordinateur.

10. Procédé selon la revendication 6, dans lequel les ressources comprennent au moins un fichier, une application et des données.

11. Procédé selon la revendication 6, comprenant en outre l'étape consistant à transférer les ressources à l'utilisateur à un emplacement au moment où et à l'emplacement où les ressources sont nécessaires.

12. Procédé selon la revendication 11, dans lequel l'étape consistant à transférer les ressources à l'utilisateur comprend le blocage de messages non souhaités pour l'utilisateur.

13. Dispositif de mémorisation de programme lisible par une machine, incorporant de manière tangible un programme d'instructions exécutable par la machine pour exécuter un procédé conforme à l'une quelconque des revendications 6 à 12 en vue d'une mise en antémémoire intelligente et de la gestion d'un réseau.
